## Europäisches Patentamt
## European Patent Office
## Office européen des brevets

(19)

(11) Numéro de publication: **0 022 050**

**A1**

# DEMANDE DE BREVET EUROPEEN

(12)

(21) Numéro de dépôt: **80630007.5**

(22) Date de dépôt: **15.02.80**

(51) Int. Cl.³: **C 21 B 13/00**

(30) Priorité: **26.06.79 LU 81427**

(43) Date de publication de la demande:
**07.01.81 Bulletin 81/1**

(84) Etats Contractants Désignés:
**BE DE FR GB IT**

(71) Demandeur: **ARBED S.A.**
**Avenue de la Liberté**
**Luxembourg(LU)**

(72) Inventeur: **Metz, Paul**
**18 rue J.P. Brasseur**
**Luxembourg(LU)**

(74) Mandataire: **Neyen, René**
**Administration Centrale de l'Arbed Case postale 1802**
**Luxembourg(LU)**

(54) **Procédé et installation pour la réduction en continu du minerai de fer.**

(57) Dans le but d'éviter la consommation de gaz naturel de plus en plus rare et onéreux, il est proposé un procédé de réduction en continu de minerais de fer qui prévoit que l'on amène en continu du minerai dans un réacteur, qu'on l'expose à l'action d'un gaz réducteur constitué notamment de H2 et de CO et qu'on défourne en continu le minerai traité.

Le gaz réducteur utilisé est le gaz dégagé au cours de la seconde moitié de la période de cuisson qui se déroule à l'intérieur d'un four à coke. Le gaz est amené à l'état chaud dans le réacteur (à 700 - 900°C).

L'installation comprend une enceinte (1) de réduction et deux enceintes (2) et (3) d'entrée et de sortie. L'enceinte (1) est reliée directement à la tuyauterie d'évacuation de gaz d'au moins un four à coke se trouvant momentanément en seconde phase de cuisson; les enceintes (2) et (3) sont reliées à des tuyauteries de fours autres que celui auquel est reliée l'enceinte (1) et qui se trouvent momentanément en première phase de cuisson.

./...

EP 0 022 050 A1

FIG.1

ARBED S.A.
Avenue de la Liberté
LUXEMBOURG

Procédé et installation pour la réduction en continu d'oxydes de fer

La présente invention concerne un procédé et une installation pour la réduction en continu d'oxydes de fer.

Parmi les procédés connus pour la réduction en continu d'oxydes de fer, l'un des plus productifs au point de vue quantité d'oxyde réduit par quantité de réducteur utilisé est basé sur l'action réductrice d'un mélange d'environ 75% d'hydrogène et 25% de monoxyde de carbone. Ce mélange gazeux est obtenu en soumettant du gaz naturel préalablement désulfuré à une réaction de craquage à l'aide de vapeur d'eau.

Imaginé à une époque où le gaz naturel était abondant et son prix d'achat relativement bas, ce procédé pour la réduction en continu de minerais de fer offrait de réels avantages, surtout dans les pays possédant des gisements de gaz naturel.

Or, dès que les prix de gaz naturel augmentent, tout procédé basé sur l'utilisation du mélange gazeux obtenu par reformage, perd son attrait initial.

L'objet de la présente invention consiste à proposer un procédé de réduction en continu de minerais de fer, mettant en oeuvre un gaz réducteur autre que le gaz naturel, ainsi que l'installation nécessaire à l'application du procédé.

Le procédé suivant l'invention prévoit qu'on amène en continu des matières contenant des oxydes de fer à l'intérieur d'un réacteur de réduction, qu'on expose les matériaux ferrifères à l'action réductrice d'un gaz constitué notamment d'hydrogène et de monoxyde de carbone et qu'on défourne en continu les matériaux traités, ledit procédé étant caractérisé en ce que le gaz réducteur utilisé est le gaz dégagé au cours de la seconde moitié de la période de cuisson qui se déroule à l'intérieur d'un four à coke et que ce gaz est amené à l' état chaud à l'intérieur du réacteur·de réduction.

En effet les gaz formés au cours de la cuisson du charbon en voie de cokéfaction accusent au fil de celle-ci des teneurs variables en hydrogène et en monoxyde de carbone. Or, l'analyse des gaz prélevés au rythme de la cuisson révèle que la fraction qui correspond à la seconde moitié de la période de cuisson accuse des teneurs en hydrogène et en monoxyde de carbone sensiblement voisines de celles présentes dans le gaz qui est obtenu en soumettant du gaz naturel à un craquage à l'aide de vapeur d'eau, lequel gaz se prête particulièrement bien à la réduction de minerais de fer. Par contre, les teneurs en $CO_2$ et en $H_2O$ qui agissent de manière défavorable à la réduction, sont réduites dans ladite fraction.

Ainsi le procédé suivant l'invention met en oeuvre un gaz réducteur composé notamment de 60-80% d'hydrogène et de 20-40% de monoxyde de carbone et qui comprend en plus du méthane et de l'oxyde de carbone en faibles quantités.

Une particularité du procédé suivant l'invention réside dans le fait que le gaz réducteur amené directement à l'intérieur du réacteur de réduction accuse des températures entre 700°C et 900°C.

Cette particularité se répercute de 2 manières distinctes sur le bilan économique de l'industriel:

D'une part le processus de réduction est en mesure de se dérouler sans apport important d'énergie extérieure, ce qui déjà constitue un atout non-négligeable.

D'autre part il devient possible du côté de la cokerie qui fournit le gaz réducteur, de renoncer aux opérations de refroidissement de pratiquement la moitié des quantités de gaz formées au cours de la cokéfaction. Ce refroidissement, onéreux, est nécessaire vue que les gaz de cokerie soutirés en continu sont distribués dans de divers réseaux en vue de leur utilisation comme p.ex. en tant que gaz de ville, gaz alimenteur de turbines etc.

Une autre particularité du procédé suivant l'invention réside dans le fait que les oxydes sont introduits à l'intérieur du réacteur de réduction soit sous forme de minerais calibrés, soit sous forme de pellets, soit encore sous forme de résidus sidérurgiques tels que poussières et boues de haut fourneau et d'aciérie, scories de fours de réchauffage, pailles de trains de laminoirs et autres.

Suivant l'invention il est utile d'assurer à l'intérieur du réacteur de réduction une pression légèrement surélevée du gaz réducteur.

En effet il a été démontré que le traitement réducteur sous pression de minerais pelletisé résulte en un accroissement du taux de réduction qui justifie largement les frais occasionnés par les opérations de pelletisation et ceux dûs à la mise en oeuvre de moyens capables d'assurer la pression désirée à l'intérieur du réacteur de réduction.

Une forme d'exécution du procédé suivant l'invention consiste à ajouter au gaz réducteur une faible quantité de méthane ou d'autres hydrocarbures.

Cette mesure est utile dans le sens qu'il en résulte par craquage du méthane sous les conditions régnant à l'intérieur du réacteur de réduction, une carburation des matériaux Ces derniers se recouvrent d'une fine couche de carbone qui agit en couche de passivation. En effet, il est connu que le minerai pelletisé, réduit à l'aide d'un gaz riche en hydrogène, présente une surface hautement réactive qui laisse prévoir un risque d'ignition spontanée des pellets lors de leurs défournements qui implique le contact avec l'oxygène de l'air.

Une autre particularité du procédé suivant l'invention prévoit d'ajouter aux matériaux ferrifères oxydés des agents réducteurs solides à haute réactivité, tels les poussiers de coke de lignite, des lignites ou tourbes séchées, du charbon de bois ou autres.

Suivant l'invention il est avantageux de procéder directement après le défournement du matériau préréduit à un briquetage en continu du produit traité, ceci pour augmenter sa densité en vrac. En plus ce briquetage constitue une mesure de sécurité complémentaire en vue de diminuer, voire éliminer le risque d'ignition spontanée des matériaux réduits. En effet une pareille ignition ne conduit pas seulement à une réoxydation poussée, mais peut résulter en des accidents graves.

L'installation nécessaire à la mise en oeuvre du procédé suivant l'invention peut, grâce à la simplicité de ce dernier consister en principe en n'importe quel type de réacteur de réduction.

Une forme d'exécution possible de l'installation suivant l'invention comprend notamment une enceinte principale de réduction et deux enceintes identiques, respectivement d'entrée et de sortie; l'enceinte principale étant reliée directement à une source de gaz de cokerie constituée par la tuyauterie d'évacuation de gaz d'au moins un four à coke et les enceintes d'entrée et de sortie étant reliées chacune à une source de gaz de cokerie qui est constituée par la tuyauterie d'évacuation de gaz d'au moins un four à coke qui est différent de celui auquel est reliée l'enceinte principale.

Suivant l'invention la source de gaz de cokerie à laquelle est reliée l'enceinte principale est constituée par la tuyauterie d'évacuation de gaz d'au moins un four à coke qui se trouve momentanément en seconde phase de la période de cuisson.

Suivant une autre particularité de l'invention la source de gaz de cokerie à laquelle sont reliées les enceintes d'entrée et de sortie est constituée par la tuyauterie d'évacuation de gaz d'au moins un four à coke qui se trouve momentanément en première phase de la période de cuisson.

L'enceinte principale comprend une grille mobile qui s'étend à travers elle dans le sens de la longueur jusqu'à l'intérieur des enceintes d'entrée et de sortie et qui est munie de barreaux qui permettent la circulation des gaz.

Une particularité de l'installation suivant l'invention consiste en ce que la partie supérieure du ruban transporteur est entourée d'une multitude de hottes disposées de façon à ce que leurs bords inférieurs effleurent les barreaux et qui sont reliés entre elles en alternance.

Grâce à cette particularité, qui consiste à imposer aux gaz réducteurs un chemin qui les conduit de nombreuses fois à travers la grille contenant des matières ferrifères oxydiques, on arrive à une exploitation poussée du pouvoir réducteur de ces gaz.

Suivant l'invention, l'installation est équipée d'un groupe assurant une circulation des gaz réducteurs dans le sens voulu  soit par une augmentation de la pression à l'entrée des gaz, soit par une dépression à la sortie des gaz.

En plus, l'installation comprend un groupe assurant à l'intérieur des enceintes d'entrée et de sortie une pression supérieure à celle règnant à l'intérieur des hottes situées dans l'enceinte principale.

Grâce à ces groupes de pompage on assure d'un côté que les opérations de réduction se déroulent utilement sous pression et d'un autre côté, qu'il n'y ait pas de fuite du gaz réducteur précieux à travers les orifices des cloisons séparant l'enceinte principale des enceintes d'entrée respectivement de sortie.

Une autre particularité de l'installation suivant l'invention consiste en ce qu'elle comprend un appareil de briquetage situé en-dessous de l'enceinte de sortie.

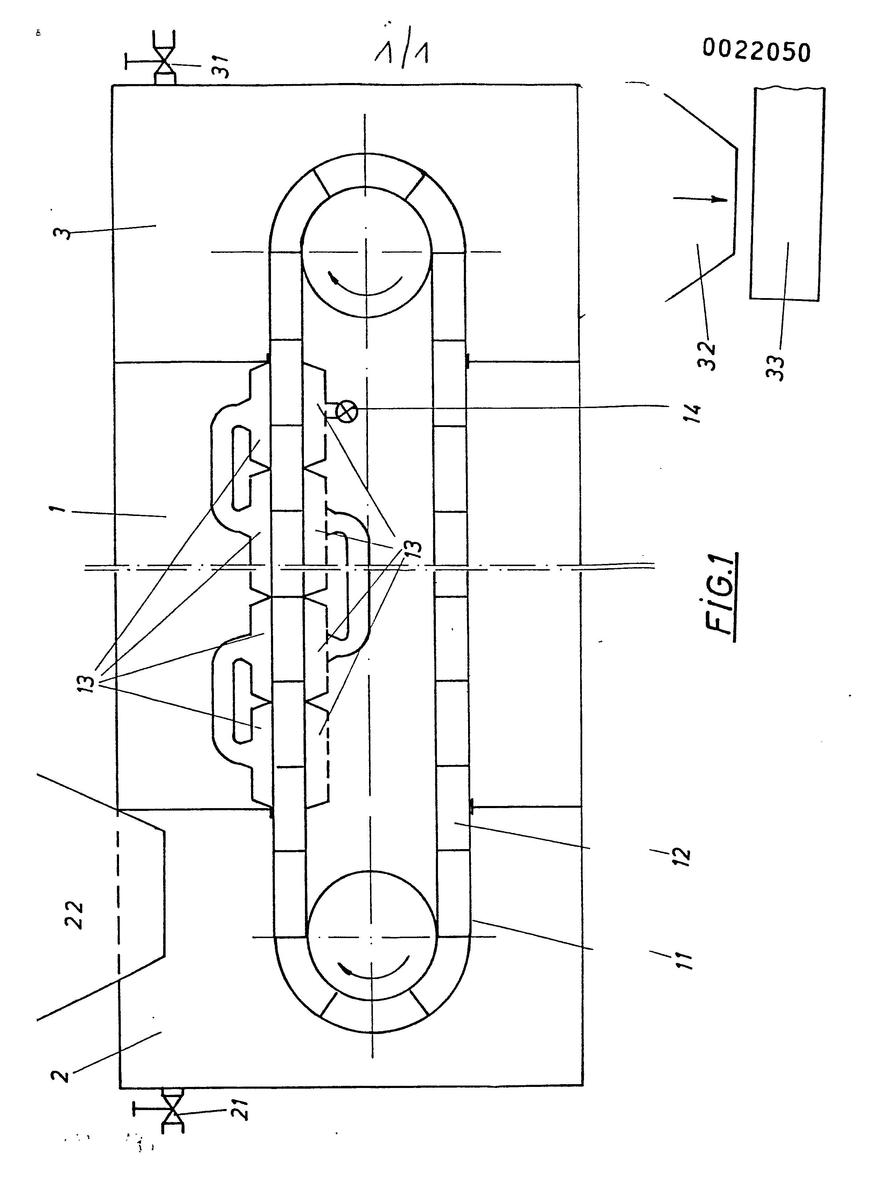

Le dessin schématique en <u>fig. 1</u> donne un aperçu non-limitatif d'une forme possible de l'installation suivant l'invention.

On distingue l'enceinte principale (1) et les enceintes d'entrée (2) et de sortie (3). A l'intérieur de l'enceinte principale (1) se trouve la grille mobile (11) consistant en des caissons (12). Ces derniers sont entourés de hottes (13) à travers lesquelles circulent les gaz réducteurs amenés directement dans l'enceinte principale à travers la vanne (14). Cette dernière peut utilement servir pour l'introduction d'une quantité déterminée de méthane ou d'autres hydrocarbures.

Les vannes (21) et (31) servent à l'introduction de gaz de cokerie faiblement réducteurs à l'intérieur des cuves d'entrée (2) et de sortie (3).

Des groupes non-représentés ici assurent une pression suffisante à l'intérieur de la cuve principale (1) et des cuves d'entrée (2) respectivement de sortie (3).

Les cuves d'entrée (2) et de sortie (3) sont équipés de sas (22) et (32) indispensables lors de l'enfournement respectivement du défournement des minerais, pellets et produits réduits.

En-dessous du sas (32) se trouve l'appareil de briquetage (33).

Revendications

1.  Procédé pour la réduction en continu d'oxydes de fer qui prévoit qu'on amène en continu des matières contenant des oxydes de fer à l'intérieur d'un réacteur de réduction, qu'on expose les matériaux ferrifères à l'action réductrice d'un gaz constitué notamment d'hydrogène et de monoxyde de carbone et qu'on défourne en continu le matériau traité, ledit procédé étant caractérisé en ce que le gaz réducteur utilisé est le gaz dégagé en cours de la seconde moitié de la période de cuisson qui se déroule à l'intérieur d'un four à coke et que ce gaz est amené à l'état chaud directement à l'intérieur du réacteur de réduction.

2.  Procédé suivant la revendication 1, caractérisé en ce que le gaz réducteur est composé notamment de 60-80% d'hydrogène et de 20-40% de monoxyde de carbone.

3.  Procédé suivant la revendication 1, caractérisé en ce que le gaz réducteur amené directement à l'intérieur du réacteur de réduction accuse des températures entre 700$^{\circ}$C et 900$^{\circ}$C.

4.  Procédé suivant les revendications 1-3, caractérisé en ce que l'on introduit les oxydes de fer à l'intérieur du réacteur de réduction soit sous forme de minerais fins ou calibrés soit sous forme de pellets, soit encore sous forme de résidus sidérurgiques, tels les poussières et boues de haut fourneau et d'aciérie, les scories de fours de réchauffage, les pailles de trains de laminoirs.

5.  Procédé suivant les revendications 1-4, caractérisé en ce que l'on assure à l'intérieur du réacteur de réduction une pression légèrement surélevée du gaz réducteur.

6.  Procédé suivant les revendications 1-5, caractérisé en ce qu'on ajoute au gaz réducteur une faible quantité de méthane ou d'autres hydrocarbures.

7. Procédé suivant les revendications 1-6, caractérisé en ce qu'on ajoute aux matériaux à base d'oxydes de fer des agents réducteurs solides à haute réactivité, tels les poussiers de coke de lignites, des lignites ou tourbes séchées, le charbon de bois.

8. Procédé suivant les revendications 1-7, caractérisé en ce qu'on procède lors du défournement du matériau préréduit à un briquetage en continu du produit traité.

9. Installation pour la mise en oeuvre du procédé suivant l' invention, caractérisée en ce qu'elle comprend notamment une enceinte principale et deux enceintes identiques, respectivement d'entrée et de sortie; l'enceinte principale étant reliée directement à une source de gaz de cokerie constituée par la tuyauterie d'évacuation de gaz d'au moins un four à coke et les enceintes d'entrée et de sortie étant reliées à une source de gaz de cokerie constituée par la tuyauterie d'évacuation de gaz d'au moins un four à coke qui est différent de celui auquel est reliée l'enceinte principale.

10. Installation suivant la revendication 9, caractérisée en ce que la source de gaz de cokerie à laquelle est reliée l'enceinte principale est constituée par la tuyauterie d'évacuation d'au moins un four à coke qui se trouve momentanément en seconde phase de la période de cuisson.

11. Installation suivant la revendication 9, caractérisée en ce que la source de gaz de cokerie à laquelle sont reliées les enceintes d'entrée et de sortie sont constituées par la tuyauterie d'évacuation de gaz d'au moins un four à coke qui se trouve momentanément en première phase de la période de cuisson.

12. Installation suivant les revendications 9-11, caractérisée en ce que la cuve principale comprend une grille mobile qui s'étend à travers elle dans le sens de la longueur jusqu'à l' intérieur des cuves d'entrée et de sortie et qui est munie de barreaux qui permettent la circulation des gaz.

13. Installation suivant les revendications 9-12, caractérisée en ce que la partie supérieure de la grille mobile est entourée d'une multitude de hottes disposées de façon à ce que leurs bords effleurent les barreaux et qui sont reliées entre elles en alternance.

14. Installation suivant les revendications 9-13, caractérisée en ce qu'elle est équipée d'un groupe assurant une circulation des gaz réducteurs dans le sens voulu.

15. Installation suivant les revendications 9-14, caractérisée en ce qu'elle comprend un groupe assurant à l'intérieur des enceintes d'entrée et de sortie une pression supérieure à celle régnant à l'intérieur des hottes situées dans l'enceinte principale.

16. Installation suivant les revendications 9-15, caractérisée en ce qu'elle comprend un appareil de briquetage situé en-dessous de l'enceinte de sortie.

_FIG.1_

0022050

Office européen des brevets

0022050

Numéro de la demande

EP 80 63 0007

**RAPPORT DE RECHERCHE EUROPEENNE**

| Catégorie | Citation du document avec indication, en cas de besoin, des parties pertinentes | Revendica-tion concernée |
|---|---|---|
| X | DE - A - 2 112 369 (STEAG)<br>* Revendications 1-7 * | 1,2,9 |
|  | DE - A - 2 638 348 (DIDIER ENGI-NEERING)<br>* Figure 1; revendications 1-12 * | 1 |
|  | DE - A - 2 310 532 (NENZEL)<br>* Page 4, lignes 1-4 * | 1 |
|  | FR - A - 2 289 613 (I.R.S.I.D.)<br>* Revendications 1-3 * | 1 |
|  | US - A - 1 832 731 (H.J. PARDEE)<br>* Figures 1-3; revendications 1-11 * | 9,12 |
|  | GB - A - 1 099 464 (RESEARCH COUN-CIL OF ALBERTA)<br>* Figure 1; revendication 8 * | 9,12 |
| P | LU - A - 79 061 (ARBED)<br>* Revendications 1-16 * | 1,2,9 |

## DOCUMENTS CONSIDERES COMME PERTINENTS

**CLASSEMENT DE LA DEMANDE (Int. Cl. 4)**

C 21 B 13/00

**DOMAINES TECHNIQUES RECHERCHES (Int. Cl. 4)**

C 21 B 13/00

**CATEGORIE DES DOCUMENTS CITES**

X: particulièrement pertinent
A arrière-plan technologique
O: divulgation non-ecrite
P document intercalaire
T: théorie ou principe a la base de l'invention
E demande faisant interférence
D document cité dans la demande
L document cite pour d'autres raisons

&: membre de la même famille, document correspondant

Le présent rapport de recherche a ete établi pour toutes les revendications

| Lieu de la recherche | Date d'achèvement de la recherche | Examinateur |
|---|---|---|
| La Haye | 29-09-1980 | ELSEN |

OEB Form 1503.1 06.78